# FASCICULE DE BREVET EUROPEEN

(11) **EP 0 855 301 B1**
(45) Date de publication et mention de la délivrance du brevet: **21.11.2001**
(21) Numéro de dépôt: 98400095.0
(22) Date de dépôt: 20.01.1998
(51) Int. Cl.: B60J 5/04

(54) **Cassette lève-vitre de porte de véhicule**
Kassetten-Fensterhebemechanismus für Fahrzeugtür
Cassette window opening mechanism for vehicle door

(30) Priorité: 24.01.1997 FR 9700790
(43) Date de publication de la demande: 29.07.1998
(73) Titulaire: MECAPLAST SAM, MC-98000 Monaco (MC)
(72) Inventeur: Morando, Patrick, 06800 Cagnes sur Mer (FR)
(74) Mandataire: Debay, Yves

(56) Documents cités:
- EP-A- 0 286 923
- EP-A- 0 350 954
- EP-A- 0 405 159
- EP-A- 0 694 427
- WO-A-94/03341
- US-A- 5 226 259
- US-A- 5 251 403

## Description

La présente invention concerne une cassette lève-vitre de portes de véhicules.

Il est connu dans l'industrie automobile de reporter les fonctions présentes à l'intérieur de la porte du véhicule sur un ensemble appelé "cassette". Cette cassette, qui supporte notamment le mécanisme lève-vitre, se monte dans la porte de véhicule. Il existe différents types de portes de véhicules ainsi que différents types de cassettes.

Il est connu une structure de porte constituée d'une coquille qui se prolonge, dans sa partie supérieure, par un cadre destiné à recevoir la vitre. La tôle extérieure de la coquille constitue l'enveloppe extérieure de la porte. Cette enveloppe extérieure est solidaire d'une enveloppe intérieure comportant deux ouvertures séparées par un lien de rigidification de la porte. Le lien de rigidification de l'enveloppe intérieure est concave vers l'intérieur de la coquille de porte, pour se conformer à la forme de la partie saillante de la cassette qui vient se monter à cet endroit.

La demande de brevet WO 94 03341 déposée par la requérante et servant de base au préambule de la revendication 1 décrit une cassette en plastique moulé qui se loge dans une telle structure de porte. Cette cassette comporte un rail sur lequel se déplace verticalement un chariot lève-vitre, ainsi qu'un guide-vitre pour un bord latéral de la vitre. Le rail et le guide qui sont solidaires du corps de la cassette sont également en matière plastique. Le chariot est entraîné en translation le long du rail par un câble actionné par un moteur logé dans le corps de la cassette. La cassette est introduite dans la porte du véhicule par sa partie supérieure, le rail tourné vers l'extérieur du véhicule. Les extrémités supérieures du rail et du guide sont insérées vers le haut dans des logements entre les enveloppes intérieures et extérieures de la coquille de la porte. Ensuite, la partie basse de la cassette est pivotée vers l'intérieur de la porte pour que les extrémités inférieures du rail et du guide pénètrent à leur tour à l'intérieur de la cassette. Puis, la vitre est introduite dans le guide et elle est fixée sur le chariot. Enfin, la cassette est fixée à la tôle intérieure de porte, par des points de fixation situés à proximité des extrémités supportant les efforts principaux. La partie saillante de la cassette située sur la face portant la vitre est logée dans l'espace libéré par la concavité du lien de rigidification.

La conception des voitures nécessite de plus en plus une grande surface vitrée. Plus la hauteur de vitre est grande, plus le rail et le guide de la cassette doivent être longs. En effet, le rail des cassettes-vitres doit être rallongé vers le bas en conséquence, pour permettre à la vitre de descendre le plus bas possible entre les deux enveloppes de la porte. Si le rail n'est pas suffisamment prolongé, la baie vitrée ne descendra pas entièrement dans la partie inférieure de la porte. Dès lors, le cadre de la porte ne pourra pas être complètement ouvert.

Cependant, lorsqu'on prolonge trop la longueur du rail, la cassette ne peut plus être montée dans la coquille de porte pourvue d'un lien de rigidification. Les extrémités supérieures du rail et du guide peuvent être insérées vers le haut dans les logements entre les enveloppes intérieures et extérieures de la coquille de porte. Mais en pivotant le bas de la cassette, les extrémités inférieures du rail et du guide vont buter sur le bord inférieur des ouvertures de l'enveloppe intérieure de la coquille. Ainsi, l'extrémité inférieure du rail ne pourra pas être placée dans les logements de la coquille prévus à cet effet. La longueur maximale du rail qui permet le montage de la cassette dans la coquille n'autorise pas la vitre à descendre jusqu'à la limite inférieure de la coquille. Il reste sous la cassette montée une distance de 30 mm environ et qui ne peut pas être utilisée pour faire descendre plus bas la vitre. Il n'est pas possible de modifier la structure de la porte, et une solution consistant à pourvoir la cassette de rails télescopiques compliquerait le dispositif lève-vitre.

Le document US 5 226 259 décrit une structure de porte et une cassette lève-vitre s'intégrant dans cette structure de porte. La cassette lève-vitre est intégrée dans une armature qui décrit le contour de la porte depuis le bord inférieur jusqu'au cadre supérieur. Cette cassette comporte deux rails métalliques parallèles aux bords latéraux de la porte sur lesquels coulissent sur des patins ou chariots supports de vitre. L'armature qui comporte le dispositif lève-vitre est prise en sandwich entre une enveloppe extérieure et une enveloppe intérieure.

Dans cette structure de porte la vitre peut descendre jusqu'à l'extrémité inférieure de la porte. Mais ce dispositif est inadapté à une structure de cassette en plastique moulé, sous peine de nuire à la rigidité du corps intérieur de la porte. De plus, ce dispositif lève-vitre modifie et complique la structure de porte, celle-ci nécessite un nombre de pièce important et un montage complexe.

Le document US 5 251 403 décrit une cassette en matière plastique moulée comportant des guides verticaux pour les bords latéraux d'une vitre. La cassette comporte également deux bras métallique fixés pivotant l'un à l'autre et formant un X. Chacune des extrémités inférieures des deux bras comporte un galet coulissant dans un rail horizontal riveté à la vitre, à proximité du bord inférieur de celle-ci. L'un des bras, ou bras porteur, est entraîné en rotation autour de son extrémité supérieure qui est solidaire de la cassette. L'extrémité supérieure de l'autre bras, ou bras régulateur, comporte un patin ou chariot coulissant dans une fente du corps de la cassette. Selon le sens de rotation du bras porteur, les extrémités inférieures des deux bras métalliques, coulissant dans le rail, entraîneront le rail, et donc la vitre, vers le haut ou vers le bas.

Toutefois, ce type de cassette doit être monté dans une structure de porte modifiée ne comportant pas de lien de rigidification central. En effet, les deux bras métalliques ne pourront pas être introduits à l'intérieur de la coquille ou seulement au prix d'un montage particulièrement complexe. Par ailleurs, la structure de la cassette en elle-même nécessite un grand nombre de pièces et ne peut pas être moulée d'un bloc.

Le document EP 350 954 décrit un lève-vitre de porte de voiture et une méthode de montage d'un tel lève-vitre dans une porte de voiture. La porte dans laquelle est monté le lève-vitre enseigné par le document EP 350 954 est formée par l'assemblage, par exemple par boulonnage ou soudage, d'un panneau extérieur sur un panneau intérieur sur lequel est préalablement monté le lève-vitre. Le montage de la porte est complété par le montage d'un panneau d'habillage sur le panneau intérieur. Le problème technique que se propose de résoudre le lève-vitre enseigné par le document EP 350 954 est de pouvoir monter un lève vitre dans une porte de faible épaisseur formée par l'assemblage d'un panneau extérieur sur un panneau intérieur sur lequel est monté le lève-vitre. Par conséquent, le document EP 350 954 ne concerne pas une cassette de porte avec un chariot, permettant le montage décalé d'une vitre pour être montée dans une ouverture de porte ayant une structure en coquille.

La présente invention a donc pour objet de pallier les inconvénients de l'art antérieur en proposant une cassette de porte de véhicule pourvue d'un dispositif lève-vitre à chariot adapté pour une fixation décalée des vitres de grande hauteur, et permettant le montage facile des cassettes sur des structures de portes en coquille.

Un autre objet de présente invention est de proposer une cassette de portes de véhicules de structure simple, pouvant être moulée.

La présente invention a également pour objet de proposer un dispositif de butée de chariots plus résistant à des actionnements répétés.

Ce but est atteint par le fait que la cassette lève-vitre de porte de véhicule comporte au moins un rail sur lequel coulisse un chariot support de vitre, et des moyens d'entraînement du chariot, chaque chariot comportant une partie coulissante complémentaire du rail, une extrémité inférieure du chariot comportant des moyens de maintien et de fixation de la vitre, le bord inférieur de la vitre étant distant de l'extrémité supérieure de la partie coulissante, du chariot de façon que, en fin de course du chariot, le bord inférieur de la vitre dépasse d'une distance déterminée de l'extrémité inférieure du rail.

Selon une autre particularité la cassette et les rails sont constitués d'un bloc en matière plastique moulée.

Selon une autre particularité le chariot support de vitre est constitué de deux parois latérales reliées à leur extrémité inférieure par une surface de support constituant un fond de façon à former sensiblement un U, les parois latérales et le fond du chariot constituant les moyens de maintien et de fixation de la vitre, la vitre étant logée verticalement entre les deux parois latérales du chariot, le bord inférieur de la vitre reposant sur le fond du chariot; une paroi latérale du chariot comportant une rainure verticale constituant la partie coulissante du chariot, l'extrémité supérieure de la partie coulissante comportant un rebord destiné à rencontrer une butée, en fin de course du chariot à l'extrémité inférieure d'un rail.

Selon une autre particularité les moyens d'entraînement du chariot sont constitués d'au moins un câble sans gaine, reliés au chariot, le câble étant entraîné par un moteur, le chariot étant pourvu de moyens élastiques de rattrapage de jeu.

Selon une autre particularité les moyens d'entraînement du chariot sont constitués d'au moins un câble relié au chariot, le câble étant pourvu d'une gaine, la gaine assurant de manière élastique le rattrapage de jeu.

Selon une autre particularité le chariot support de vitre est constitué de deux parois latérales reliées à leur extrémité inférieure par une surface de support constituant un fond de façon à former sensiblement un U, les parois latérales et le fond du chariot constituant les moyens de maintien et de fixation de la vitre, la vitre étant logée verticalement entre les deux parois latérales du chariot, le bord inférieur de la vitre reposant sur le fond du chariot; une extrémité supérieure d'une paroi latérale du chariot comportant un rebord constituant la partie coulissante du chariot.

Selon une autre particularité la cassette comporte, à proximité de l'extrémité inférieure d'au moins un rail, une butée amortisseur.

Selon une autre particularité la butée amortisseur est constituée d'une pièce comportant un perçage transversal, la butée pouvant tourner autour d'une tige de fixation insérée dans le perçage et logée perpendiculairement dans la face de la cassette portant les rails, la butée comportant une surface de butée disposée à proximité de l'extrémité inférieure du rail, en fin de course vers le bas, l'extrémité inférieure du rebord du chariot venant heurter la surface de butée.

Selon une autre particularité la cassette comporte des moyens élastiques coopérant avec la butée pour s'opposer à la rotation de la butée dans le sens de l'accompagnement du chariot vers le bas

Selon une autre particularité la butée comporte sur sa périphérie une surface d'appui, et en ce que les moyens élastiques sont constitués d'un ressort de compression exerçant une pression sur la surface d'appui de la butée de façon à relever légèrement la surface de butée vers le haut du rail, et s'opposer à la rotation de la butée lorsque la partie coulissante du chariot vient heurter la butée.

Selon une autre particularité la butée amortisseur constitue également une poulie inférieure du rail.

Selon une autre particularité la butée amortisseur comporte un logement dans lequel une poulie est montée pivotante, la butée étant pourvue d'une rainure prévue pour le câble transmettant les efforts d'abaissement du patin, le câble glissant dans la rainure de la butée, puis passant dans la poulie logée dans la butée.

Selon une autre particularité la surface périphérique de la poulie-butée amortisseur située au bas de la cassette est courbe et pourvue d'une rainure, la rainure épousant le contour courbe de la butée et étant située dans un plan sensiblement parallèle au plan de déplacement du chariot sur le rail, pour guider le câble d'abaissement du chariot glissant dans la rainure de la poulie-butée.

Selon une autre particularité les moyens élastiques s'opposant à la rotation de la butée dans le sens d'accompagnement du chariot vers le bas, sont constitués d'un ressort de traction solidaire, par une extrémité de la cassette et son autre extrémité, de la butée.

Selon une autre particularité la cassette comporte des moyens de limitation de rotation de la poulie-butée dans sens contraire au sens d'accompagnement du chariot vers le bas.

Selon une autre particularité les moyens de limitation de rotation de la poulie-butée sont constitués de moyens élastiques.

Selon une autre particularité chaque chariot comporte deux logements verticaux respectivement pour le câble d'abaissement et pour le câble d'élévation du chariot, le logement pour le câble d'élévation étant pourvu de seconds moyens élastiques coopérant avec l'extrémité du câble lorsque le chariot est tiré vers le haut du rail.

Selon une autre particularité les logements pour les câbles d'abaissement et d'élévation sont ménagés respectivement, dans le rebord du chariot et dans la paroi pourvue du rebord, les deux logements étant dans un plan sensiblement perpendiculaire aux parois latérales du chariot.

Selon une autre particularité les logements des câbles, respectivement d'abaissement et d'élévation, sont constitué chacun d'un trou prolongé par un conduit débouchant, de dimension correspondant à celle du câble, les trous et conduits étant concentriques et formant un épaulement à leur jonction, respectivement vers le bas et vers le haut, les seconds moyens élastiques étant constitués d'un ressort de compression placé dans le trou du logement du câble d'élévation, chacun des câbles étant introduit dans son logement par le conduit, le câble d'abaissement est pourvu à son extrémité d'une pièce butant sur la jonction entre le trou et le conduit lorsque le câble est tiré vers le bas, et, le câble d'élévation étant pourvu à son extrémité d'une pièce formée d'un corps prolongée par une tête, la jonction annulaire entre le corps et la tête de la pièce de l'extrémité du câble d'élévation venant comprimer le ressort dans le trou du logement d'élévation, entraînant le chariot vers le haut sur le rail.

Selon une autre particularité le chariot comporte un évidement latéral permettant de diminuer l'intervalle entre la poulie supérieure du système d'entraînement des câbles et le chariot, ainsi que l'intervalle entre la poulie supérieure et le rail, de façon à limiter l'effet de couple provoqué par la tension des câbles.

Selon une autre particularité le câble d'élévation est relié à la partie inférieure du chariot et le câble d'abaissement est relié à la partie supérieure du chariot.

Selon une autre particularité le ou les rails sont métalliques et montés sur la cassette au moyen des axes des poulies, les axes des poulies étant fixés sur la tôle de la porte du véhicule.

D'autres particularités et avantages de la présente invention apparaîtront plus clairement à la lecture de la description ci-après faite en référence aux dessins annexés dans lesquels :
- la figure 1 représente une vue longitudinale, du côté de l'enveloppe intérieure, d'une structure de porte de véhicule,
- la figure 2 représente une vue en coupe latérale, selon la ligne AA, de la structure de porte de la figure 1,
- la figure 3 représente une vue en perspective éclatée d'une structure de cassette selon l'invention,
- la figure 4 représente une vue en perspective d'un coin inférieur d'une vitre logée dans un chariot support de vitre selon l'invention,
- la figure 5 représente un schéma de principe du fonctionnement d'un dispositif d'actionnement des chariots supports de vitre,
- figure 6 représente une vue de face d'un mécanisme de poulie-butée inférieure selon l'invention,
- la figure 7 représente une vue selon la coupe BB de la figure 6 du dispositif de butée selon l'invention, et dans lequel une vitre est montée sur les chariots,
- la figure 8 représente une vue en coupe de la figure 4, selon un plan perpendiculaire à la vitre, et passant par les deux logements des câbles d'entraînement du chariot,
- la figure 9 représente une vue en perspective d'un coin inférieur d'une vitre logée dans un chariot support de vitre, selon un autre mode de réalisation de l'invention,
- la figure 10A représente une vue en coupe longitudinale, selon un plan de symétrie, d'une poulie butée dans un autre mode de réalisation selon l'invention,
- la figure 10B représente une vue de dessus de la poulie butée de la figure 10A,
- la figure 11 représente une vue en coupe d'une variante de réalisation des chariots selon l'invention, en position de butée supérieure.

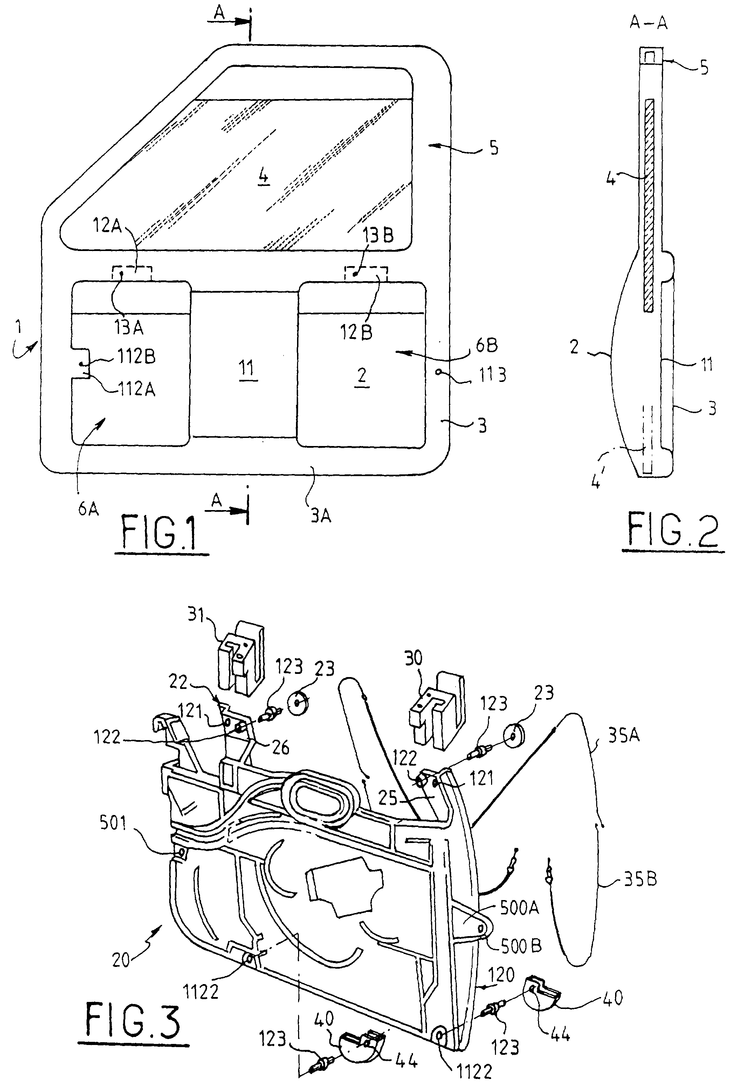

La figure 1 représente une vue longitudinale, du côté de l'enveloppe intérieure (3), d'une structure de porte de véhicule en matériau métallique ou composite. Une telle porte de véhicule est constituée d'une coquille (1) qui se prolonge, dans sa partie supérieure, par un cadre (5) destiné à recevoir la vitre (4). La feuille extérieure (2) de la coquille constitue l'enveloppe extérieure de la porte. Cette enveloppe extérieure (2) est solidaire d'une enveloppe intérieure (3) comportant deux ouvertures (6A, 6B) séparées par un lien de rigidification (11) de la porte. Le lien de rigidification (11) de l'enveloppe intérieure (3) est concave vers l'intérieur de la coquille de porte (1, figure 2). Cette concavité accueille la partie d'une cassette (20) sensiblement rectangulaire, située entre deux rails (21, 22) porte-chariots (30, 31). La coquille de porte (1) comporte des logements (12) destinés aux extrémités supérieures des rails de la cassette Un logement (12A, 12B) pour rail est ménagé dans chacune des parties supérieures des deux ouvertures (6A, 6B), entre les enveloppes intérieure (3) et extérieure (2) de la coquille de la porte (1). Ces logements (12A, 12B), destinés à recevoir les extrémités supérieures des rails, comportent chacun un perçage (13A, 13B) ménagé transversalement dans l'enveloppe intérieure (3) de la porte (1). Le bord latéral non concave de l'ouverture (6B) située à l'arrière de la porte comporte, sensiblement à mi-hauteur de l'ouverture, un perçage (113). Ce perçage est ménagé transversalement dans l'enveloppe intérieure de la coquille (1). Enfin, le bord latéral non concave de l'ouverture (6A) située à l'avant de la porte comporte, sensiblement à mi-hauteur de l'ouverture, une patte (112A). Cette patte (112A), qui s'étend dans le plan de l'enveloppe intérieure (3) et vers le centre de l'ouverture, comporte un perçage transversal. Les quatre perçages (13A, 13B, 113, 112B) situés respectivement dans les deux logements pour rails (12A, 12B), dans le bord et la patte (112A) des bords latéraux des ouvertures de la coquille, constituent quatre points de fixation de la cassette dans la coquille (1). Le nombre, la forme, et la disposition de ces points de fixation ne sont pas limités à l'exemple décrit ci-dessus.

La figure 3 représente une vue en perspective d'une structure de cassette (20) selon l'invention. La cassette (20) est constituée d'un panneau en matière plastique moulée, sensiblement rectangulaire. Les arêtes les plus longues de la cassette (20) constituent les bords supérieurs et inférieurs de la cassette (20). Une face longitudinale (120) de la cassette (20) comporte deux rails verticaux (21, 22). Un logement (121) pour vis de fixation est ménagé dans chacune des extrémités supérieures des rails (21, 22) de la cassette. Ces deux logements (121) sont situés en vis à vis des perçages (13A, 13B) de la coquille de porte (1) pour permettre à des vis ou des clips d'assurer la liaison de la cassette avec la porte. Un bord latéral de la cassette (20) est pourvu, sensiblement en son milieu, d'une patte de fixation (500A) qui s'étend latéralement dans un plan parallèle aux rails (21, 22). Cette patte de fixation (500A) comporte un perçage transversal (500B). Un second perçage (501) est ménagé également dans l'autre bord latéral de la cassette (20), sensiblement en son milieu. Le perçage transversal (500B) de la patte de fixation (500A) de la cassette reçoit une vis de fixation qui coopère avec le perçage (113) du bord latéral du logement (6A) situé à l'arrière de la porte (1). De même, le second perçage (501) de l'autre bord latéral de la cassette est lui destiné à recevoir une autre vis ou des clips qui se fixe dans le perçage (112B) de la patte (112A) du logement (6B) situé à l'avant de la porte. Chaque rail (21, 22) s'étend verticalement au-dessus du bord supérieur de la cassette (20). Un chariot (30, 31) support de vitre (4) coulisse sur chaque rail (21, 22). Les mécanismes (non représentés) réalisant les diverses fonctions de la porte sont fixés de l'autre côté de la cassette (20), sur la face longitudinale qui ne comporte pas de rails. Les mécanismes d'entraînement des câbles (35A, 35B) transmettant les efforts d'élévation et d'abaissement aux chariots (30, 31) sont disposés sur la face de la cassette portant les rails. Lors du montage de la cassette (20) dans la porte, ces éléments saillants disposés entre les rails se logent dans la concavité du lien de rigidification (11) de la porte (1).

Le montage de la cassette (20) dans la coquille (1) de porte peut s'effectuer de la façon suivante : la cassette (20) est introduite dans la porte du véhicule par sa partie supérieure, les rails tournés vers l'extérieur du véhicule. Les extrémités supérieures des rails (21, 22) sont insérées vers le haut dans les logements (12) entre les enveloppes intérieure (3) et extérieure (2) de la coquille (1) de la porte. Simultanément, la patte de fixation (500A) de la cassette est introduite à l'arrière de la porte, entre les enveloppes intérieure (3) et extérieure (2) de la coquille (1) de porte. Ensuite, la partie inférieure de la cassette (20) est pivotée vers l'intérieur de la porte (1) pour que le reste de la cassette (20) pénètre à son tour à l'intérieur de la coquille (1). Ainsi, le bord latéral de la cassette (20) pourvu du second perçage (501) vient se placer derrière la patte (112A) de l'ouverture (6A) situé à l'avant de la porte La fixation de la cassette (20) dans la coquille de porte (1) peut être réalisée de manière connue de l'homme du métier, par exemple par des vis ou des clips.

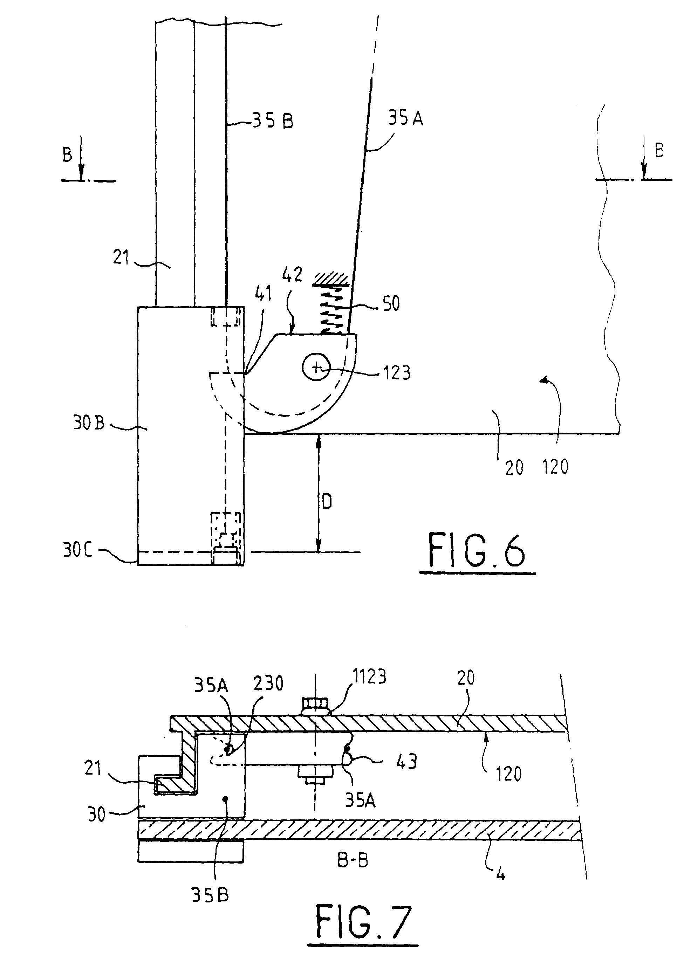

La face longitudinale (120) pourvue de rails (21, 22) sera montée vers l'extérieur du véhicule. Aussi, et par souci de simplification, nous désignerons dans la suite la face (120) longitudinale de la cassette pourvue de rails par le terme : "face extérieure de la cassette", ou "face extérieure". Un premier rail vertical (21) est situé sur le bord latéral de la face extérieure de la cassette (20) qui est pourvu d'une patte de fixation (500A). Un second rail (22) est situé sur la même face extérieure (120) de la cassette (20), parallèle au premier rail (21) et à proximité de l'autre bord latéral, c'est à dire celui qui comporte un perçage (501). En section transversale, chaque rail (21) formé d'un profil en L est moulé en même temps que la cassette avec une jambe du L parallèle et distante de la face longitudinale (120) de la cassette. La branche du L qui est parallèle aux faces longitudinales de la cassette (20) est orientée vers l'extérieur de la cassette (20). Cet exemple de forme de rail n'est nullement limitatif, le rail pourra avoir tout autre forme connue. Par exemple, les rails (21, 22) pourront avoir une section transversale en T ou en Y. Chacun des rails (21, 22) s'étend verticalement au-dessus du bord supérieur de la cassette (20). Ces portions de rails qui s'étendent au-dessus du panneau de la cassette sont formées sur des pattes supports de rail (25, 26) qui prolongent le panneau de la cassette (20). Ces pattes supports de rail (25, 26) sont situées dans un plan parallèle à la face extérieure (120) de la cassette. En plus du perçage (121) pour la fixation de la cassette (20) dans la porte (1), un deuxième perçage (122) est ménagé dans chacune des extrémités supérieures des pattes supports de rail (25, 26). Ce deuxième perçage (122) est lui prévu pour la fixation d'une poulie supérieure (23) destinée aux câbles d'entraînement des chariots (30, 31). Chacune des poulies supérieure (23) est montée sur une patte support de rail (25, 26), l'axe de rotation de la poulie (23) étant sensiblement perpendiculaire aux faces longitudinales de la cassette (20). Le panneau de cassette (20) comporte également à proximité du bord inférieur de la cassette (20) deux perçages transversaux (1122) destinés chacun à une poulie inférieure (40). Chacun de ces deux perçages (1122) est ménagé, sensiblement à la verticale des perçages (122) destinés au montage des poulies supérieures (23). Les poulies inférieures (40) montées sur la face extérieure (120) de la cassette (20). Des moyens de fixation (1123/123) assurent de façon connue le montage libre en rotation des poulies (23, 40) sur des axes montés dans les perçages transversaux (122, 1122). De façon connue, les axes des poulies (23, 40) sont fixés sur la tôle de la porte (1). Les deux poulies supérieures (23) sont situées dans un plan parallèle au plan contenant les deux poulies inférieures (40), et faiblement éloigné de la face extérieure (120) de la cassette (20). Cette disposition des poulies supérieures (23) est obtenue par la courbure des pattes de support de rail (25, 26). Mais cette disposition des poulies supérieures (23) pourra être réalisée également au moyen de tiges de fixation (123) plus allongées et pourvues d'un épaulement sur leur longueur contre lequel la poulie (23) viendra se positionner. Sur chacun des rails (21, 22) coulisse un chariot (30, 31) support de vitre (4). La vitre (4) (figure 7) est portée par les chariots (30, 31), du côté de la face extérieure (120) de la cassette (20). La vitre (4) se déplace sensiblement parallèle aux faces longitudinales de la cassette (20). Les deux poulies supérieures (23) et les deux poulies inférieures (40) réalisent le guidage de deux câbles d'entraînement (35) (figure 5) des deux chariots (30, 31). Le mécanisme d'entraînement des câbles est connu de l'homme du métier, un schéma de principe du fonctionnement de celui-ci est représenté à la figure 5. Chaque chariot (30, 31) est relié à l'une des deux extrémités de chacun deux câbles (35). Chaque câble (35) passe dans la poulie supérieure (23) d'un des deux rails (21, 22), et, simultanément, sur la poulie inférieure (40) de l'autre rail (21). Les deux câbles (35) sont montés de manière à ce qu'ils décrivent un 8 et un des deux câbles forme une boucle sur l'axe d'un moteur d'entraînement (36). Le moteur d'entraînement (36) enroule une extrémité d'un des deux câbles (35) tandis que l'autre se désenroule ou vis versa pour entraîner chacun des deux chariots (30, 31) dans une direction identique, soit l'élévation, soit l'abaissement.

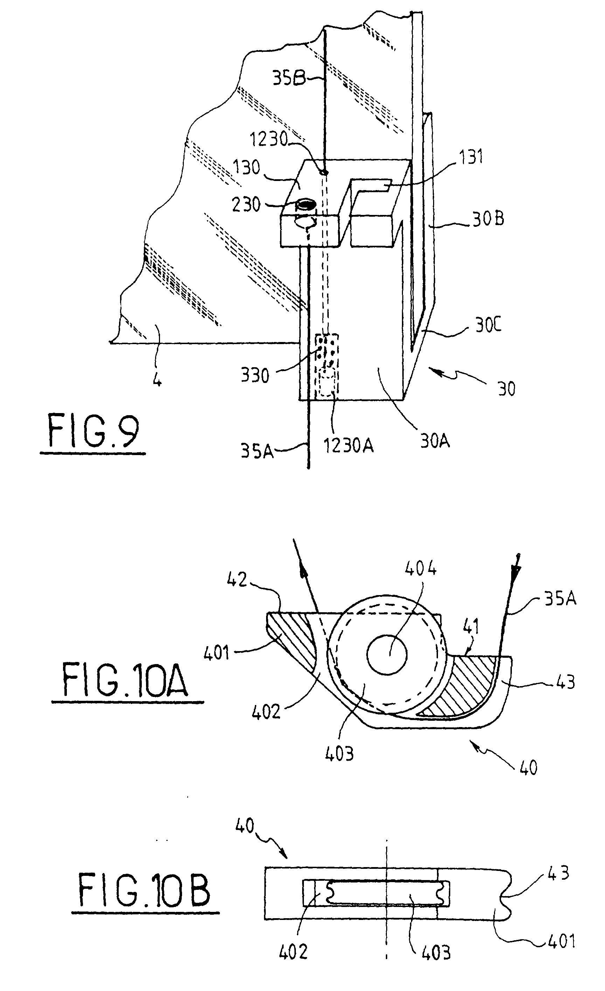

Chaque chariot (30, 31) (figures 3 à 8) support de vitre (4) est constitué de deux parois latérales (30A, 30B) rectangulaires et parallèles. Ces deux parois latérales (30A, 30B) sont reliées à leur extrémité inférieure par un fond (30C) de façon à former sensiblement un U. Le fond (30C) constitue une surface de support pour une vitre (4) logée entre les deux parois parallèles (30A, 30B) du chariot (30, 31). La partie inférieure de la vitre (4) est logée verticalement entre les deux parois latérales (30A, 30B) des deux chariots (30, 31). Cette vitre (4) repose donc par le bord inférieur sur la surface de support (30C) des chariots (30, 31). Les deux parois latérales (30A, 30B) du chariot (30) ont des épaisseurs différentes. La paroi (30A) latérale du chariot (30) de plus grande épaisseur comporte une rainure (131) verticale, sur toute la hauteur du chariot (30). La rainure (131) est située sur le bord de la paroi (30A) latérale, parallèle à la vitre (4) et qui n'est pas en contact avec la vitre (4). Cette rainure (131) a un profil complémentaire du profil du rail (21) pour que le chariot (30) puisse coulisser sur ce dernier. Cette paroi latérale (30A) pourvue d'une rainure (131) constitue la partie coulissante du chariot (30), ainsi, cette paroi sera appelée dans la suite paroi coulissante (30A). La rainure (131) a la forme d'un L dont la première branche est perpendiculaire aux parois latérales (30A, 30B) du chariot (30). L'extrémité supérieure de la paroi coulissante (30A) comporte un rebord (130) parallélépipédique. Ce rebord (130) est perpendiculaire à la paroi coulissante (30A), et orienté vers l'extérieur du U constitué par le chariot (30). Le rebord (130) est formé par la l'extrémité supérieure de la paroi coulissante (30A) située le long de la première branche du L de la rainure (131). C'est à dire que le rebord (130) est d'un coté de la rainure (131), entre la rainure (131) et le centre de la vitre (4). Le rebord (130) du chariot (30) comporte un premier logement vertical (230) pour l'extrémité du câble (35A) qui transmet les efforts d'abaissement du chariot (30). Ce premier logement (230) est constitué d'un trou cylindrique (230A), ménagé dans la surface supérieure du rebord (130) du chariot (30). Ce trou cylindrique (230A) se prolonge vers le bas du chariot (30) par conduit cylindrique de diamètre correspondant au diamètre du câble d'abaissement (35A). Le conduit (230B) débouche dans la face inférieure du rebord (130). Le trou (230A) et le conduit (230B) sont concentriques et forment un épaulement vers le bas à leur jonction, dans l'épaisseur du rebord (130). Le câble d'abaissement (35A) du chariot (30) est introduit dans son logement (230) par le conduit (230B) Une tête cylindrique (135A) (figure 8) est fixée à l'extrémité du câble d'abaissement (35A). Cette tête cylindrique (135A) se loge dans le trou cylindrique (230A) du rebord (130). Lorsque le câble (35A) est entraîné vers le bas, la pièce cylindrique (135A) en butée sur le fond du trou (230A), entraîne le chariot (30) dans le sens de son abaissement. Le câble (35A) se prolonge vers le bas et passe dans la poulie inférieure (40) de l'extrémité inférieure du rail (21). La paroi coulissante (30A) du chariot (30) comporte un second logement vertical (1230) pour l'extrémité du câble (35B) qui transmet les efforts d'élévation au chariot (30). Ce second logement (1230) est situé dans un plan perpendiculaire aux parois latérales (30A, 30B) du chariot (30), et passant par le logement (230) du câble d'abaissement (35A). Ce logement d'élévation (1230) est constitué d'un trou cylindrique (1230A) vertical et formé dans la face inférieure de la paroi (30A) du chariot (30), à proximité du fond (30C) du chariot. Ce trou cylindrique (1230A) se prolonge vers le haut dans l'épaisseur de la paroi par un conduit cylindrique (1230B) de diamètre correspondant au diamètre du câble d'élévation (35B). Le conduit (1230B) débouche dans l'extrémité supérieure de la paroi (30A) du chariot (30). Ce trou (1230A) et ce conduit (1230B) sont concentriques et forment une butée vers le haut à leur jonction, dans l'épaisseur de la paroi (30A) du chariot (30). Cette butée est située à environ un quart de la hauteur du chariot (30) à partir du fond (30C). Un ressort de compression (330) est placé dans le trou (1230A) du logement d'élévation (1230) pour permettre les rattrapages de jeu. Une pièce (135B), formée d'un corps cylindrique se prolongeant par une tête cylindrique concentrique, est fixée à l'extrémité du câble d'élévation (35B). La jonction entre le corps et la tête de la pièce (135B) forme une butée annulaire. Lorsque le câble d'élévation est tiré vers le haut du rail (21), cette butée annulaire située à l'extrémité du câble (35B) comprime en partie le ressort (330) dans le trou cylindrique (1230A) jusqu'à ce que le corps cylindrique vienne en butée. Ainsi, le chariot (30) est tiré vers le haut du rail (21). Le ressort assure un amortissement et une adaptation en longueur du câble. Ceci évite les à-coups dans la translation de la vitre (4). Cette adaptation peut également être réalisée de la manière connue consistant à pourvoir les extrémités des câbles de moyens élastiques. Le câble d'élévation (35B) s'étend vers le haut du rail (21) et passe dans la poulie supérieure (23) correspondante. On rappelle que les poulies supérieures (23) ne sont pas situées à la verticale des poulies inférieure (40), mais faiblement éloignées de la face extérieure (120) de la cassette (20). C'est pourquoi les deux logements (230, 1230) de câbles ne sont pas situés dans un plan parallèle aux parois latérales (30A, 30B) du chariot (30). Seul le chariot (30) coulissant sur le rail (21) situé sur un bord latéral de la cassette (20) pourvu d'une patte de fixation (500A) a été décrit. Cependant, l'autre chariot (31) et son rail (22) sont symétriques par rapport à un plan perpendiculaire à la face extérieure (120) de la cassette (20). L'exemple de réalisation des chariots (30, 31) décrits ci-dessus n'est nullement limitatif. Ainsi, par exemple, les 4 poulies (23, 40) peuvent être disposées dans un même plan parallèle à la face extérieure (120) de la cassette (20). Dans cette configuration, les logements (230, 1230) pour câbles d'abaissement (35A) et d'élévation (35B) seront situés dans un même plan, parallèle aux parois latérales (30A, 30B) du chariot (30, 31). Ces logements pour câbles (230, 1230) pourront être réalisés de toute manière connue dans l'épaisseur de la paroi coulissante (30A) du chariot, ou dans le rebord (130) de cette paroi coulissante (30A)

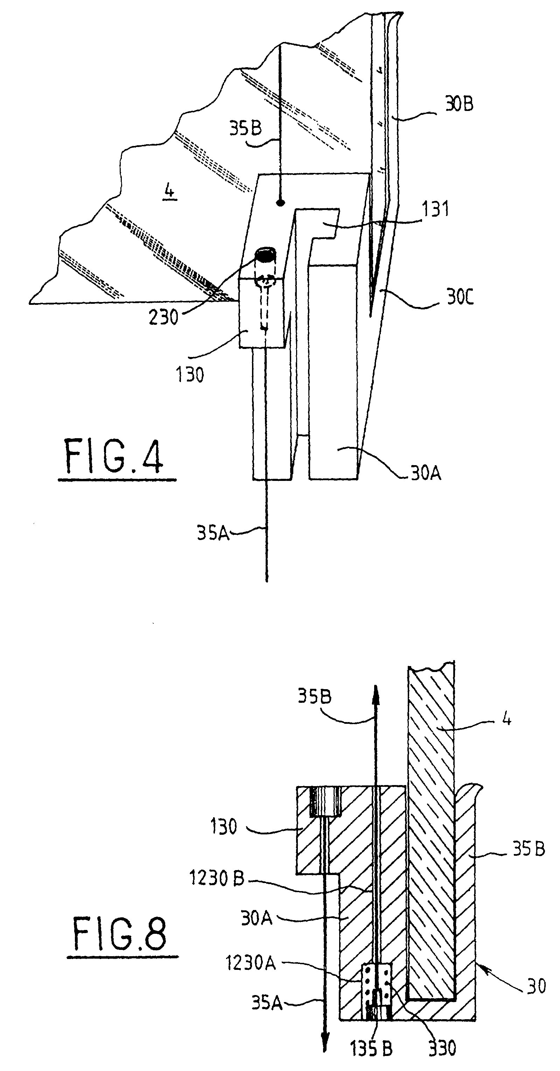

La figure 9 représente une vue en perspective d'un coin inférieur d'une vitre (4) logée dans un chariot (30) support de vitre, selon un autre mode de réalisation de l'invention. Dans cet autre mode de réalisation la rainure (131) ne s'étend pas sur toute la hauteur du chariot (30). La rainure (131) est ménagée dans un rebord (130) situé sur une extrémité supérieure d'une paroi latérale (30A) Le rebord (130) est perpendiculaire à la paroi latérale (30A), sur toute la largeur de la paroi latérale (30A). Les éléments identiques aux éléments des figures 4 et 8 sont désignés par les mêmes références numériques. Les poulies butées inférieures (40) sont fixées sur la face extérieure (120) de la cassette (20), chacune à proximité d'un coin inférieure de la cassette (20) et sensiblement à la verticale d'une poulie supérieure (23). Les poulies inférieures (40) sont montées pivotantes sur des tiges de fixation (123). La poulie située à proximité de l'extrémité inférieure de l'autre rail (22) de la cassette (20) peut être identique ou non à la poulie butée (40). Cette autre poulie (40) (non représentée) à la figure 6 sera montée de la même manière, mais symétriquement par rapport à un plan perpendiculaire aux faces longitudinales de la cassette (20). La poulie butée (40) est constituée d'une pièce ayant sensiblement la forme d'un demi-disque. La surface latérale du contour du demi-disque qui n'est pas courbe est constituée deux surfaces planes rectangulaires (41, 42) parallèles et formant une marche. La surface inférieure (41) de la marche est appelée "surface de butée", la surface supérieure de la marche (42) est appelée "surface d'appui". La surface courbe du contour de la poulie (40) comporte une rainure (43) pour le passage d'un câble d'élévation (35A) du chariot (30). Cette rainure (43) épouse sensiblement le contour circulaire de la poulie (40) et devient plus profonde à mesure qu'elle s'approche de la surface de butée (41) de la poulie (40). La poulie (40) comporte un perçage cylindrique transversal (44) L'axe du perçage (44) est sensiblement dans le plan de la surface de butée (41) de la poulie (40), et à proximité du bord courbe de cette poulie (40). Le perçage (44) est destiné au montage de la poulie (40) sur la tige de fixation (123), et sur la face extérieure de la cassette (20). Les deux faces planes (41, 42) de la poulie (40) sont tournées vers le haut de la cassette (20), la surface de butée (41) orientée vers le rail (21). Un ressort par exemple, de compression (50), solidaire par une de ses extrémités de la cassette (20), exerce par une autre extrémité une pression sur la surface d'appui (42) de la poulie (40), à proximité du contour circulaire de la poulie (40). De cette façon, le ressort (50) tend à relever légèrement cette surface de butée (41) vers le haut. La poulie (40) peut tourner légèrement autour de sa tige de fixation (123), mais cette rotation est limitée par le câble qui glisse dans sa rainure. Les poulies supérieures (23) tournent autour de leur axe de rotation, entraînées par les câbles d'élévation (35B), tandis que le câble d'abaissement (35A) glisse dans la rainure (43) de la poulie inférieure (40). Lorsque le chariot (30) est en position haute sur le rail (21), la poulie inférieure (40) a sa face de butée (41) légèrement relevée vers le haut par rapport à l'extrémité inférieure du rail (21). Quand le câble d'abaissement est entraîné vers le bas du rail (21), le chariot (30) descend le long du rail (21). Lorsque le chariot (30) support de vitre (4) arrive à l'extrémité inférieure du rail (21), au bas de la cassette (20), sa course est arrêtée par la surface de butée (41) de la poulie. La face inférieure du rebord parallélépipédique (130) du chariot (30) vient heurter la surface de butée (41) de la poulie (40). La poulie (40) amortit ce contact en tournant légèrement sur elle même autour de la tige de fixation (123) dans la direction opposée à celle de l'action du ressort. Pendant cette rotation, la poulie (40) s'abaisse légèrement et accompagne le chariot (30). Simultanément, la face plane supérieure de la poulie (42) se relève et comprime le ressort (50) qui assure un amortissement. Une telle butée supporte des actionnements répétés par le chariot (30) sans risque de casser. Ainsi, la poulie inférieure (40) décrite ci-dessus a également pour fonction de réaliser une butée amortisseur. Lorsque le chariot (30) est arrivé en fin de course, au bas de rail (21), son rebord (130) repose sur la surface de la butée (41). La structure en forme de U du chariot (30) permet au fond (30C) du chariot de dépasser sous l'extrémité inférieure du rail (21). De cette façon, le bord inférieur de la vitre (4), portée par les chariots (30, 31), pourra descendre en dessous du bord inférieur de la cassette (20), et pénétrer derrière le bandeau inférieur (3A) de la porte. De cette manière, la cassette sera facilement montée dans la coquille de porte (1). Le bord inférieur de la vitre (4) dépassera d'une distance D déterminée (figure 6) sous la cassette (20). Cette distance D sera par exemple fonction de la forme des chariots (30, 31), c'est à dire de la hauteur des faces parallèles du chariot (30, 31), ou de l'épaisseur de rebord (130) de ce même chariot. Il est donc possible d'utiliser toute la place disponible dans le fond de la coquille (1) pour faire descendre la vitre (4). A la figure 2 est représenté en pointillés la position basse (4') de la partie inférieure de la vitre dans le fond de la coquille (1). La forme de réalisation des chariots (30, 31) n'est pas limitée à l'exemple décrit ci-dessus. Par exemple, la vitre (4) pourra être fixée par tout autre moyen connu sur les chariots. De même, d'autres formes de réalisation des butées inférieures entrent dans le cadre de l'invention. Par exemple il est possible de remplacer les poulies-butées inférieures (40) décrites ci-dessus, par des poulies identiques aux poulies supérieures (30). Dans ce cas, une butée (40) ayant sensiblement la même structure que la poulie-butée (40) précédemment décrite peut être disposée sur la cassette ou sur la porte à proximité de l'extrémité inférieure du rail (21, 22). De même, cette butée (40) peut être montée sur la même tige de fixation qu'une poulie inférieure de type traditionnel. Une autre possibilité est de pourvoir l'extrémité inférieure de l'un des deux rails (21, 22) d'une poulie-butée (40) selon l'invention, tandis que l'autre extrémité inférieure de l'autre rail comporte une poulie de type traditionnel. Dans ce cas, seul l'un des deux chariots (30, 31) rencontre une butée (40) lorsqu'il arrive à l'extrémité inférieure du rail. Mais, compte tenu du système d'entraînement décrit ci-dessus, quand l'un des deux rails est arrêté, l'autre rail s'arrête également, par action du câble (35B). De plus, grâce au poids de la vitre et aux moyens élastiques(50, 330), respectivement de la butée et des chariots, il se crée un ajustement, et donc le bord inférieur de la vitre reste horizontal.

Les figures 10A et 10B représentent une poulie butée (40), destinée à être disposée à l'extrémité inférieure d'un rail (21, 22), dans un autre mode de réalisation selon l'invention. Dans ces figures les éléments identiques aux éléments des figures précédentes sont désignés par les mêmes références numériques. Dans cet autre mode de réalisation la poulie butée (40) est constituée d'une pièce (401) ayant la forme d'un demi-disque, sensiblement identique à la poulie butée (40) des figures 6 et 7. Ce demi-disque (401) comporte donc également une surface d'appui (42) et une surface de butée (41). Ainsi, le demi-disque (401) assure la fonction de butée pour le chariot (30). Ce demi-disque (401) comporte, sensiblement en son milieu, un logement (402) longitudinale destiné à une poulie (403) de type traditionnel. Cette poulie (403) traditionnelle a la forme d'un disque pourvu d'un perçage transversal (404). Le demi-disque (401) comporte un perçage transversal dans lequel est introduit une tige (non représentée) destinée à la fixation de la poulie butée (40) sur la cassette. La poulie (403) est montée libre en rotation sur cette tige de fixation, à l'intérieur du demi-disque (401). Ainsi, l'axe de rotation de la poulie (403) est perpendiculaire aux faces longitudinales du demi-disque (401). C'est à dire que l'axe de rotation de la poulie (403) dans le demi-disque (401) est parallèle aux surfaces, d'appui (42) et de butée (41). Le demi-disque (401) est pourvu également d'une rainure (43) qui épouse sensiblement le contour du demi-disque (401), depuis le bord de la surface d'appui (41), jusque dans le logement (402) pour la poulie (403). La rainure (43) est prévue pour le câble (35A) transmettant les efforts d'abaissement du patin (30). Le câble (35A) venant du chariot (30) passe dans la rainure (43) du demi-disque (401), puis dans la poulie (403) logée dans le demi-disque (403). Ainsi, lorsque le chariot (30) est en mouvement, le câble (35A) glisse dans le demi-disque (403), et entraîne en rotation la poulie (403). D'autres moyens de fixations de la poulie butée (40) à la cassette entrent dans le cadre de l'invention.

Dans l'exemple de réalisation décrit ci-dessus, les chariots (30, 31) contiennent des ressorts (330) qui assurent les rattrapages de jeu et une adaptation en longueur des câbles lors du déplacement de la vitre. Dans une autre variante de l'invention, les chariots (30, 31) ne contiennent pas ces ressorts. Dans ce cas, les câbles (35A, 35B), par exemple de type "BOWDEN", sont pourvus d'une gaine de type connu. L'ensemble câbles-gaines comporte alors des moyens connus de rattrapage de jeu au niveau des moyens (36) d'entraînement des câbles.

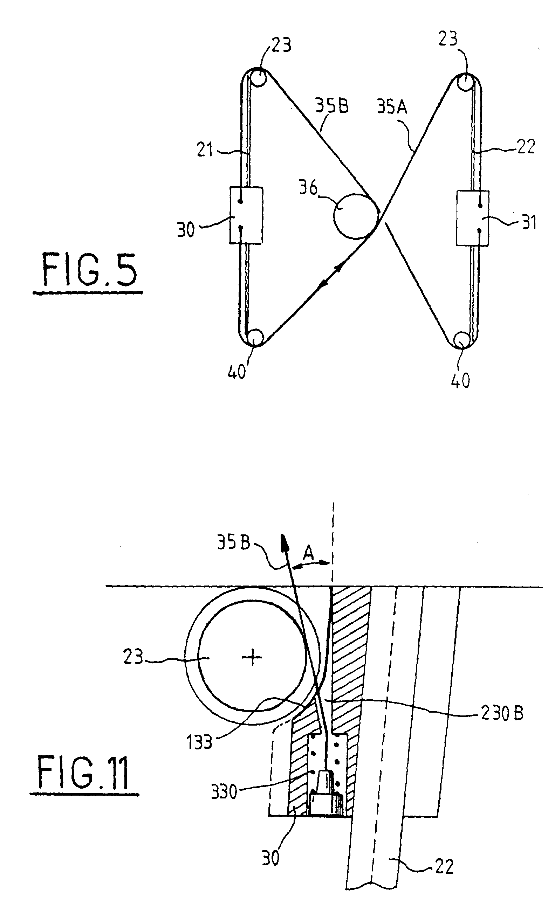

La figure 11 représente une vue en coupe d'une variante avantageuse de réalisation des chariots (30, 31) selon l'invention, le chariot (30) représenté étant en position de butée supérieure. Les éléments identiques à ceux décrits ci-dessus sont désignés par les mêmes références numériques. Le chariot (30) de la variante de la figure 11 présente un évidement (133) latéral prévu pour la poulie supérieure (23) lorsque le chariot arrive en butée supérieure. Cet évidement (133) permet de diminuer l'intervalle entre la poulie (23) supérieure et le chariot (30, 31) en position de butée haute, ainsi que l'intervalle entre la poulie (23) et le rail (21, 22). De cette façon, l'effet de couple provoqué par la tension du câble (35B) d'élévation est évité, la tension du câble, égale à la tension du moteur, pouvant prendre des valeurs comprises entre 12 et 16 daN. Grâce à cette forme avantageuse, l'angle A décrit par les positions extrêmes du câble (35B) d'élévation entre les positions hautes et basses du chariot (30, 31) est au maximum égal à 15 degrés. A cet effet, la forme du conduit (230B) de passage du câble (35B) est adaptée en conséquence, pour permettre les différentes inclinaisons du câble (35B). Par ailleurs, le chariot (30, 31) peut ne pas être pourvu du ressort (330) assurant le rattrapage de jeu au niveau de l'extrémité du câble (33B) d'élévation.

De façon préférée, dans toutes les formes de réalisation des chariots (30, 31), le câble (35B) d'élévation est accroché à la partie inférieure du chariot (30, 31) tandis que le câble (35A) d'abaissement est accroché à la partie supérieure du chariot (30, 31). De cette façon, l'efficacité de la translation des chariots (30, 31) sur les rails (21, 22) se trouve améliorée.

Dans une autre variante de réalisation, la cassette (20) ne comporte pas de rails en plastique, moulés d'un bloc avec la cassette (20). Dans ce cas, des rails métalliques peuvent être montés par des moyens connus sur la cassette (20). Par exemple, les rails métalliques ont sensiblement la forme d'un S en section transversale. Avantageusement, les rails métalliques sont alors montés sur l'axe (123) des poulies (23, 40), les axes des poulies étant fixés sur la tôle de la porte du véhicule. Ces rails en métal permettent notamment d'améliorer la rigidité de l'ensemble et assurent un meilleur coulissement des chariots (30, 31).

## Revendications

1. Cassette lève-vitre de porte de véhicule, la porte ayant une structure en coquille dont l'enveloppe intérieure comprend ou moins une ouverture, la cassette lève-vitre comportant au moins un rail (21, 22) sur lequel coulisse un chariot (30, 31) support de vitre (4) et des moyens (35A, 35B, 36) d'entraînement du chariot, **caractérisée en ce que** chaque chariot (30, 31) comporte une partie coulissante (30A, 130, 131) complémentaire du rail (21, 22), une extrémité inférieure du chariot (30, 31) comportant des moyens de maintien et de fixation (30A, 30B, 30C) de la vitre (4), et **en ce que** le bord inférieur de la vitre est distant de la partie coulissante (30A, 130, 131) du chariot (30, 31) de façon que, en fin de course du chariot (30, 31), le bord inférieur de la vitre (4) dépasse d'une distance déterminée de l'extrémité inférieure du rail (21, 22).

2. Cassette lève-vitre de porte de véhicule selon la revendication 1 **caractérisée en ce que** la cassette (20) et les rails (30, 31) sont constitués d'un bloc en matière plastique moulée.

3. Cassette lève-vitre de porte de véhicule selon la revendication 1 ou 2, **caractérisée en ce que** le chariot (30, 31) support de vitre (4) est constitué de deux parois latérales (30A, 30B) reliées à leur extrémité inférieure par une surface de support (30C) constituant un fond de façon à former sensiblement un U, les parois latérales (30A, 30B) et le fond (30C) du chariot (30, 31) constituant les moyens de maintien et de fixation de la vitre (4), la vitre (4) étant logée verticalement entre les deux parois latérales (30A, 30B) du chariot (30, 31), le bord inférieur de la vitre (4) reposant sur le fond du chariot (30, 31); une paroi latérale (30A) du chariot comportant une rainure (131) verticale constituant la partie coulissante du chariot (30, 31), l'extrémité supérieure de la partie coulissante comportant un rebord (130) destiné à rencontrer une butée (40), en fin de course du chariot (30) à l'extrémité inférieure d'un rail (21, 22).

4. Cassette lève-vitre de porte de véhicule selon l'une des revendications 1 à 3, **caractérisée en ce que** les moyens d'entraînement du chariot (30, 31) sont constitués d'au moins un câble (35A, 35B) sans gaine, relié au chariot (30, 31), le câble (35A, 35B) étant entraîné par un moteur (36), le chariot (30, 31) étant pourvu de moyens (330) élastiques de rattrapage de jeu.

5. Cassette lève-vitre de porte de véhicule selon l'une des revendications 1 à 3, **caractérisée en ce que** les moyens d'entraînement du chariot (30, 31) sont constitués d'au moins un câble (35A, 35B) relié au chariot (30, 31), le câble (35A, 35B) étant pourvu d'une gaine, la gaine assurant de manière élastique le rattrapage de jeu.

6. Cassette lève-vitre de porte de véhicule selon l'une des revendication 1, 2, 4 ou 5, **caractérisée en ce que** le chariot (30, 31) support de vitre (4) est constitué de deux parois latérales (30A, 30B) reliées à leur extrémité inférieure par une surface de support (30C) constituant un fond de façon à former sensiblement un U, les parois latérales (30A, 30B) et le fond (30C) du chariot (30, 31) constituant les moyens de maintien et de fixation de la vitre (4), la vitre (4) étant logée verticalement entre les deux parois latérales (30A, 30B) du chariot (30, 31), le bord inférieur de la vitre (4) reposant sur le fond du chariot (30, 31); une extrémité supérieure d'une paroi latérale (30A) du chariot comportant un rebord (130) constituant la partie coulissante du chariot (30, 31).

7. Cassette lève-vitre de porte de véhicule selon l'une des revendications 1 à 6, **caractérisée en ce que** la cassette (20) comporte, à proximité de l'extrémité inférieure d'au moins un rail (21, 22), une butée amortisseur (40).

8. Cassette lève-vitre de porte de véhicule selon la revendication 7, **caractérisée en ce que** la butée amortisseur (40) est constituée d'une pièce comportant un perçage transversal (44), la butée (40) pouvant tourner autour d'une tige de fixation (123) insérée dans le perçage (44) et logée perpendiculairement dans la face (120) de la cassette portant les rails (21, 22), la butée (40) comportant une surface de butée (41) disposée à proximité de l'extrémité inférieure du rail (21, 22), en fin de course vers le bas, l'extrémité inférieure du rebord (130) du chariot (30, 31) venant heurter la surface de butée (41)

9. Cassette lève-vitre de porte de véhicule selon la revendication 8, **caractérisée en ce que** la cassette (20) comporte des moyens élastiques (50) coopérant avec la butée (40) pour s'opposer à la rotation de la butée (40) dans le sens de l'accompagnement du chariot (30, 31) vers le bas.

10. Cassette lève-vitre de porte de véhicule selon la revendication 9 **caractérisée en ce que** la butée (40) comporte sur sa périphérie une surface d'appui (42), et **en ce que** les moyens élastiques (50) sont constitués d'un ressort de compression exerçant une pression sur la surface d'appui (42) de la butée (40) de façon à relever légèrement la surface de butée (41) vers le haut du rail (21, 22), et s'opposer à la rotation de la butée (40) lorsque la partie coulissante (130) du chariot (30, 31) vient heurter la butée (40).

11. Cassette lève-vitre de porte de véhicule selon l'une des revendications 7 à 10, **caractérisée en ce que** la butée amortisseur (40) constitue également une poulie inférieure du rail (21, 22).

12. Cassette lève-vitre de porte de véhicule selon la revendication 11, **caractérisée en ce que** la butée amortisseur (40) comporte une logement (402) dans lequel une poulie (403) est montée pivotante, la butée (40) étant pourvue d'une rainure (43) prévue pour le câble (35A) transmettant les efforts d'abaissement du patin (30), le câble (35A) glissant dans la rainure (43) du de la butée (401), puis passant dans la poulie (403) logée dans la butée (403).

13. Cassette lève-vitre de porte de véhicule selon la revendication 11, **caractérisée en ce que** la surface périphérique de la poulie-butée amortisseur (40) située au bas de la cassette (20) est courbe et pourvue d'une rainure (43), la rainure (43) épousant le contour courbe de la butée et étant située dans un plan sensiblement parallèle au plan de déplacement du chariot (30, 31) sur le rail (21, 22), pour guider le câble d'abaissement (35A) du chariot (30, 31) glissant dans la rainure de la poulie-butée (40).

14. Cassette lève-vitre de porte de véhicule selon la revendication 9 **caractérisée en ce que** les moyens élastiques (50) s'opposant à la rotation de la butée dans le sens d'accompagnement du chariot vers le bas, sont constitués d'un ressort de traction solidaire, par une extrémité de la cassette (20) et son autre extrémité, de la butée (40).

15. Cassette lève-vitre de porte de véhicule selon la revendications 9, **caractérisée en ce que** la cassette (20) comporte des moyens de limitation de rotation de la poulie-butée (40) dans sens contraire au sens d'accompagnement du chariot (30, 31) vers le bas(50).

16. Cassette lève-vitre de porte de véhicule selon la revendication 15 **caractérisée en ce que** les moyens de limitation de rotation de la poulie-butée (40) sont constitués de moyens élastiques.

17. Cassette lève-vitre de porte de véhicule selon la revendication 3 ou 5, **caractérisé en ce que** chaque chariot (30, 31) comporte deux logements verticaux (230, 1230) respectivement pour le câble d'abaissement (35A) et pour le câble d'élévation (35B) du chariot (30, 31), le logement (1230) pour le câble d'élévation (35B) étant pourvu de seconds moyens élastiques (330) coopérant avec l'extrémité du câble (35B) lorsque le chariot (30, 31) est tiré vers le haut du rail (21, 22).

18. Cassette lève-vitre de porte de véhicule selon la revendication 17 **caractérisé en ce que** les logements pour les câbles d'abaissement (35A) et d'élévation (35B) sont ménagés respectivement, dans le rebord (130) du chariot (30, 31) et dans la paroi (30A) pourvue du rebord (130), les deux logements étant dans un plan sensiblement perpendiculaire aux parois latérales (30A, 30B) du chariot.

19. Cassette lève-vitre de porte de véhicule selon la revendication 18 **caractérisé en ce que** les logements (230, 1230) des câbles, respectivement d'abaissement (35A) et d'élévation (35B), sont constitué chacun d'un trou (230A, 1230A) prolongé par un conduit (230B, 1230B) débouchant, de dimension correspondant à celle du câble (35A, 35B), les trous (230A, 1230A) et conduits (230B, 1230B) étant concentriques et formant un épaulement à leur jonction, respectivement vers le bas et vers le haut, les seconds moyens élastiques (330) étant constitués d'un ressort de compression placé dans le trou (1230A) du logement du câble d'élévation (35B), chacun des câbles (35A, 35B) étant introduit dans son logement (230, 1230) par le conduit (230B, 1230B), le câble d'abaissement (35A) est pourvu à son extrémité d'une pièce (135A) butant sur la jonction entre le trou (230A) et le conduit (230B) lorsque le câble (35A) est tiré vers le bas, et, le câble d'élévation étant pourvu à son extrémité d'une pièce (135B) formée d'un corps prolongée par une tête, la jonction annulaire entre le corps et la tête de la pièce (135B) de l'extrémité du câble d'élévation (35B) venant comprimer le ressort (330) dans le trou (1230B) du logement d'élévation (1230), entraînant le chariot (30, 31) vers le haut sur le rail (21, 22).

20. Cassette lève-vitre de porte de véhicule selon l'une des revendications 4 à 19 **caractérisé en ce que** le chariot (30, 31) comporte un évidement (133) latéral permettant de diminuer l'intervalle entre la poulie (23) supérieure du système d'entraînement des câbles et le chariot (30, 31), ainsi que l'intervalle entre la poulie (35) supérieure et le rail (21, 22), de façon à limiter l'effet de couple provoqué par la tension des câbles (35B).

21. Cassette lève-vitre de porte de véhicule selon les revendications 4, 5, 17 et 19 **caractérisé en ce que** le câble (35B) d'élévation est relié à la partie inférieure du chariot (30, 31) et **en ce que** le câble (35A) d'abaissement est relié à la partie supérieure du chariot (30, 31).

22. Cassette lève-vitre de porte de véhicule selon la revendication 1 **caractérisé en ce que** le ou les rails (21, 22) sont métalliques et montés sur la cassette au moyen des axes des poulies (23, 40), les axes des poulies (23, 40) étant fixés sur la tôle de la porte du véhicule.

23. Cassette lève-vitre de porte de véhicule selon l'une des revendications 1 à 22, **caractérisée en ce que** l'enveloppe intérieure de la porte comprend deux ouvertures reliées par un lien de rigidification.

## Claims

1. Window-crank cartridge for a vehicle door, the door having a shell structure of which the internal covering comprises at least one aperture, the window-crank cartridge comprising at least one rail (21, 22) on which a window (4)-supporting carriage (30, 31) and carriage-driving means (35A, 35B, 36) slide, **characterised in that** each carriage (30, 31) comprises a sliding portion (30A, 130, 131) mating with the rail (21, 22), a lower end of the carriage (30, 31) comprising holding and fixing means (30A, 30B, 30C) for the window (4), and **in that** the lower edge of the window is remote from the sliding portion (30A, 130, 131) of the carriage (30, 31) so that, at the end of carriage travel (30, 31), the lower edge of the window (4) extends beyond the lower end of the rail (21, 22) by a defined distance.

2. Window-crank cartridge for a vehicle door according to claim 1, **characterised in that** the cartridge (20) and the rails (30, 31) consist of a block of moulded plastics material.

3. Window-crank cartridge for a vehicle door according to claim 1 or 2, **characterised in that** the window (4)-supporting carriage (30, 31) consists of two lateral walls (30A, 30B) connected at their lower end by a supporting surface (30C) constituting a bottom so as substantially to form a U, the lateral walls (30A, 30B) and the bottom (30C) of the carriage (30, 31) constituting the holding and fixing means for the window (4), the window (4) being accommodated vertically between the two lateral walls (30A, 30B) of the carriage (30, 31), the lower edge of the window (4) resting on the bottom of the carriage (30, 31); a lateral wall (30A) of the carriage comprising a vertical groove (131) constituting the sliding portion of the carriage (30, 31), the upper end of the sliding portion comprising a shoulder (130) intended to meet an abutment (40) at the end of travel of the carriage (30) at the lower end of a rail (21, 22).

4. Window-crank cartridge for a vehicle door according to any of claims 1 to 3, **characterised in that** the carriage (30, 31) driving means consist of at least one unsheathed cable (35A, 35B) connected to the carriage (30, 31), the cable (35A, 35B) being driven by a motor (36), the carriage (30, 31) being provided with slack-adjusting elastic means (330).

5. Window-crank cartridge for a vehicle door according to any of claims 1 to 3, **characterised in that** the carriage (30, 31) driving means consist of at least one cable (35A, 35B) connected to the carriage (30, 31), the cable (35A, 35B) being sheathed, the sheath acting as an elastic slack adjuster.

6. Window-crank cartridge for a vehicle door according to any of claims 1, 2, 4 or 5, **characterised in that** the window (4)-supporting carriage (30, 31) consists of two lateral walls (30A, 30B) connected at their lower end by a supporting surface (30C) constituting a bottom so as substantially to form a U, the lateral walls (30A, 30B) and the bottom (30C) of the carriage (30, 31) constituting the holding and fixing means for the window (4), the window (4) being accommodated vertically between the two lateral walls (30A, 30B) of the carriage (30, 31), the lower edge of the window (4) resting on the bottom of the carriage (30, 31); an upper end of a lateral wall (30A) of the carriage comprising a flange (130) constituting the sliding portion of the carriage (30, 31).

7. Window-crank cartridge for a vehicle door according to any of claims 1 to 6, **characterised in that** the cartridge (20) comprises, in the vicinity of the lower end of at least one rail (21, 22), a shock-absorbing abutment (40).

8. Window-crank cartridge for a vehicle door according to claim 7, **characterised in that** the shock-absorbing abutment (40) consists of a part comprising a transverse perforation (44), the abutment (40) being adapted to rotate round a fixing rod (123) inserted in the perforation (44) and accommodated perpendicularly in the face (120) of the rail (21, 22)-carrying cartridge, the abutment (40) comprising an abutment surface (41) arranged in the vicinity of the lower end of the rail (21, 22) toward the bottom at the end of travel, the lower end of the flange (130) of the carriage (30, 31) striking the abutment surface (41).

9. Window-crank cartridge for a vehicle door according to claim 8, **characterised in that** the cartridge (20) comprises elastic means (50) cooperating with the abutment (40) to oppose the rotation of the abutment (40) in the direction of following the carriage (30, 31) toward the bottom.

10. Window-crank cartridge for a vehicle door according to claim 9, **characterised in that** the abutment (40) comprises a bearing surface (42) at its periphery and **in that** the elastic means (50) consist of a compression spring exerting a pressure on the bearing surface (42) of the abutment (40) so as to raise the abutment surface (41) slightly toward the top of the rail (21, 22) and to oppose the rotation of the abutment (40) when the sliding portion (130) of the carriage (30, 31) strikes the abutment (40).

11. Window-crank cartridge for a vehicle door according to any of claims 7 to 10, **characterised in that** the shock-absorbing abutment (40) also constitutes a lower pulley of the rail (21, 22).

12. Window-crank cartridge for a vehicle door according to claim 11, **characterised in that** the shock-absorbing abutment (40) comprises a recess (402) in which a pulley (403) is pivotally mounted, the abutment (40) being provided with a groove (43) intended for the cable (35A) transmitting the lowering stresses of the runner (30), the cable (35A) sliding in a groove (43) of the abutment (401) then passing into the pulley (403) accommodated in the abutment (403).

13. Window-crank cartridge for a vehicle door according to claim 11, **characterised in that** the peripheral surface of the shock-absorbing pulley abutment (40) located at the bottom of the cartridge (20) is curved and provided with a groove (43), the groove (43) matching the curved contour of the abutment and being located in a plane substantially parallel to the plane of displacement of the carriage (30, 31) on the rail (21, 22) in order to guide the carriage (30, 31)-lowering cable (35A) sliding in the groove of the pulley/abutment (40).

14. Window-crank cartridge for a vehicle door according to claim 9, **characterised in that** the elastic means (50) opposing the rotation of the abutment in the direction of following the carriage toward the bottom consist of a draw spring integral at one end with the cartridge (20) and at its other end with the abutment (40).

15. Window-crank cartridge for a vehicle door according to claim 9, **characterised in that** the cartridge (20) comprises means for limiting the rotation of the pulley/abutment (40) in the direction counter to the direction of following the carriage (30, 31) to the bottom (50).

16. Window-crank cartridge for a vehicle door according to claim 15, **characterised in that** the rotation limiting means for the pulley/abutment (40) consist of elastic means.

17. Window-crank cartridge for a vehicle door according to claim 3 or 5, **characterised in that** each carriage (30, 31) comprises two vertical recesses (230, 1230) for the lowering cable (35A) and for the raising cable (35B) of the carriage (30, 31) respectively, the recess (1230) for the raising cable (35B) being provided with second elastic means (330) cooperating with the end of the cable (35B) when the carriage (30, 31) is drawn toward the top of the rail (21, 22).

18. Window-crank cartridge for a vehicle door according to claim 17, **characterised in that** the recesses for the lowering cable (35A) and the raising cable (35B) are made in the flange (130) of the carriage (30, 31) and in the wall (30A) provided with the flange (130) respectively, the two recesses being in a plane substantially perpendicular to the lateral walls (30A, 30B) of the carriage.

19. Window-crank cartridge for a vehicle door according to claim 18, **characterised in that** the recesses (230, 1230) for the lowering cable (35A) and the raising cable (35B) respectively, each consist of a hole (230A, 1230A) extended by an opening conduit (230B, 1230B) and having a size corresponding to that of the cable (35A, 35B), the holes (230A, 1230A) and conduits (230B, 1230B) being concentric and forming a shoulder at their joint at the bottom and at the top respectively, the second elastic means (330) consisting of a compression spring placed in the hole (1230A) of the recess for the raising cable (35B), each of the cables (35A, 35B) being introduced into its recess (230, 1230) by the conduit (230B, 1230B), the lowering cable (35A) is provided at its end with a part (135A) abutting against the joints between the hole (230A) and the conduit (230B) when the cable (35A) is drawn downwards and the raising cable being provided at its end with a part (135B) formed by a body extended by a head, the annular joint between the body and the head of the part (135B) of the end of the raising cable (35B) compressing the spring (330) in the hole (1230B) of the raising recess (1230), driving the carriage (30, 31) upward on the rail (21, 22).

20. Window-crank cartridge for a vehicle door according to any of claims 4 to 19, **characterised in that** the carriage (30, 31) comprises a lateral bay (133) for reducing the distance between the upper pulley (23) of the cable driving system and the carriage (30, 31) as well as the distance between the upper pulley (35) and the rail (21, 22) so as to limit the effect of the torque caused by the tension of the cables (35B).

21. Window-crank cartridge for a vehicle door according to claims 4, 5, 17 and 19, **characterised in that** the raising cable (35B) is connected to the lower portion of the carriage (30, 31) and **in that** the lowering cable (35A) is connected to the upper portion of the carriage (30, 31).

22. Window-crank cartridge for a vehicle door according to claim 1, **characterised in that** the rail or rails (21, 22) are metallic and are mounted on the cartridge by means of the pulley shafts (23, 40), the pulley shafts (23, 40) being fixed on the metal panel of the vehicle door.

23. Window-crank cartridge for a vehicle door according to any of claims 1 to 22, **characterised in that** the internal covering of the door comprises two apertures connected by a stiffening connection.

## Patentansprüche

1. Fensterheber-Modul für eine Fahrzeugtür, wobei die Tür eine schalenförmige Struktur aufweist, deren innere Wand wenigstens eine Öffnung enthält und das Fensterheber-Modul wenigstens eine Schiene (21, 22) aufweist, auf der ein Schlitten (30, 31) gleitet, der die Fensterscheibe (4) trägt, sowie Mittel (35A, 35B, 36) zur Mitnahme des Schlittens, **dadurch gekennzeichnet, daß** jeder Schlitten (30, 31) einen zu der Schiene (21, 22) komplementären gleitenden Teil (30A, 130, 131) aufweist, wobei ein unteres Ende des Schlittens (30, 31) Halte- und Befestigungsmittel (30A, 30B, 30C) für die Fensterscheibe (4) umfaßt, und daß der untere Rand der Fensterscheibe von dem gleitenden Teil (30A, 130, 131) des Schlittens (30, 31) beabstandet ist, so daß der untere Rand der Fensterscheibe (4) in der Endstellung des Schlittens (30, 31) eine bestimmte Distanz über das untere Ende der Schiene (21, 22) hinausragt.

2. Fensterheber-Modul für eine Fahrzeugtüre nach Anspruch 1, **dadurch gekennzeichnet, daß** das Modul (20) und die Schienen (21, 22) einteilig aus gegossenem Kunststoff gebildet sind.

3. Fensterheber-Modul fiir eine Fahrzeugtür nach Anspruch 1 oder 2, **dadurch gekennzeichnet, daß** der Schlitten (30, 31), der die Fensterscheibe (4) hält, aus zwei seitlichen Wänden (30A, 30B) gebildet ist, die an ihrem unteren Ende durch eine Auflagefläche (30C) verbunden sind, die eine Grundfläche darstellt, so daß im wesentlichen ein U gebildet wird, wobei die seitlichen Wände (30A, 30B) und die Grundfläche (30C) des Schlittens (30, 31) die Halte- und Befestigungsmittel für die Fensterscheibe (4) bilden, die Fensterscheibe (4) vertikal zwischen den zwei seitlichen Wänden (30A, 30B) des Schlittens (30, 31) aufgenommen ist, der untere Rand der Fensterscheibe (4) auf der Grundfläche des Schlittens (30, 31) ruht, eine seitliche Wand (30A) des Schlittens eine vertikale Nut (131) aufweist, die den gleitenden Teil des Schlittens (30, 31) bildet, und das obere Ende des gleitenden Teils einen Vorsprung (130) aufweist, der in der Endstellung des Schlittens (30) an dem unteren Ende der Schiene (21, 22) an einen Anschlag (40) stößt.

4. Fensterheber-Modul fiir eine Fahrzeugtür nach einem der Ansprüche 1 bis 3, **dadurch gekennzeichnet, daß** die Mittel zur Mitnahme des Schlittens (30, 31) aus wenigstens einem mantellosen Seil (35A, 35B) gebildet sind, der mit dem Schlitten (30, 31) verbunden ist, wobei das Seil (35A, 35B) von einem Motor (36) angetrieben wird und der Schlitten (30, 31) mit elastischen Mitteln (330) zum Ausgleichen des Spiels versehen ist.

5. Fensterheber-Modul für eine Fahrzeugtür gemäß einem der Ansprüche 1 bis 3, **dadurch gekennzeichnet, daß** die Mittel zur Mitnahme des Schlittens (30, 31) aus wenigstens einem mit dem Schlitten (30, 31) verbundenen Seil (35A, 35B) gebildet sind, wobei das Seil (35A, 35B) mit einem Mantel versehen ist, der auf elastische Weise das Ausgleichen des Spiels gewährleistet.

6. Fensterheber-Modul für eine Fahrzeugtür nach einem der Ansprüche 1, 2, 4 oder 5, **dadurch gekennzeichnet, daß** der Schlitten (30, 31), der die Fensterscheibe (4) hält, aus zwei seitlichen Wänden (30A, 30B) gebildet ist, die an ihrem unteren Ende durch eine Auflagefläche (30C) verbunden sind, welche eine Grundfläche darstellt, so daß im wesentlichen ein U gebildet wird, wobei die seitlichen Wände (30A, 30B) und die Grundfläche (30C) des Schlittens (30, 31) die Halte- und Befestigungsmittel für die Fensterscheibe (4) bilden, die Fensterscheibe (4) vertikal zwischen den beiden seitlichen Wänden (30A, 30B) des Schlittens (30, 31) aufgenommen ist, der untere Rand der Fensterscheibe (4) auf der Grundfläche des Schlittens (30, 31) ruht und ein oberes Ende einer seitlichen Wand (30A) des Schlittens einen Vorsprung (130) aufweist, der den gleitenden Teil des Schlittens (30, 31) bildet.

7. Fensterheber-Modul für eine Fahrzeugtür nach einem der Ansprüche 1 bis 6, **dadurch gekennzeichnet, daß** das Modul (20) in der Nähe des unteren Endes von wenigstens einer Schiene (21, 22) einen dämpfenden Anschlag (40) aufweist.

8. Fensterheber-Modul für eine Fahrzeugtür nach Anspruch 7, **dadurch gekennzeichnet, daß** der dämpfende Anschlag (40) aus einem Teil gebildet ist, das eine Durchgangsbohrung (44) in Querrichtung aufweist, wobei der Anschlag (40) um einen Befestigungsstift (123) geschwenkt werden kann, der in die Durchgangsbohrung (44) eingesetzt und senkrecht in der Seite (120) des Moduls aufgenommen ist, die die Schienen (21, 22) trägt, der Anschlag (40) eine Anschlagfläche (41) aufweist, die in der Nähe des unteren Endes der Schiene (21, 22) angeordnet ist, und das untere Ende des Vorsprungs (130) des Schlittens (30, 31) in der unteren Endstellung an die Anschlagfläche (41) stößt.

9. Fensterheber-Modul für eine Fahrzeugtür nach Anspruch 8, **dadurch gekennzeichnet, daß** das Modul (20) elastische Mittel (50) aufweist, die mit dem Anschlag (40) zusammenwirken, um dem Schwenken des Anschlags (40) in Mitnahmerichtung des sich nach unten bewegenden Schlittens (30, 31) entgegenzuwirken.

10. Fensterheber-Modul für eine Fahrzeugtür nach Anspruch 9, **dadurch gekennzeichnet, daß** der Anschlag (40) auf seinem Umfang eine Stützfläche (42) aufweist und daß die elastischen Mittel (50) aus einer Druckfeder gebildet sind, die auf die Stützfläche (42) des Anschlags (40) einen Druck ausübt, so daß die Anschlagfläche (41) leicht nach oben in Richtung des oberen Endes der Schiene (21, 22) gehoben wird und dem Schwenken des Anschlags (40) entgegengewirkt wird, wenn der gleitende Teil (130) des Schlittens (30, 31) an dem Anschlag (40) anstößt.

11. Fensterheber-Modul für eine Fahrzeugtür nach einem der Ansprüche 7 bis 10, **dadurch gekennzeichnet, daß** der dämpfende Anschlag (40) zudem eine untere Seilrolle der Schiene (21, 22) bildet.

12. Fensterheber-Modul für eine Fahrzeugtür nach Anspruch 11, **dadurch gekennzeichnet, daß** der dämpfende Anschlag (40) eine Aufnahme (402) aufweist, in der ein Seilrolle (403) drehbar gelagert ist, wobei der Anschlag (40) mit einer Nut (43) für das Seil (35A) versehen ist, welches die Absenkbelastung des Schlittens (30) überträgt, das Seil (35A) in der Nut (43) des Anschlags (401) gleitet und dann in der Seilrolle (403) verläuft, die in dem Anschlag (40) aufgenommen ist.

13. Fensterheber-Modul fiir eine Fahrzeugtüre nach Anspruch 11, **dadurch gekennzeichnet, daß** die Umfangsfläche des dämpfenden Seilrolle-Anschlags (40), der unten an dem Modul (20) angeordnet ist, gekrümmt und mit einer Nut (43) versehen ist, wobei sich die Nut (43) der gekrümmten Kontur des Anschlags anpaßt und in einer Ebene angeordnet ist, die im wesentlichen parallel ist zu der Verschiebungsebene des Schlittens (30, 31) auf der Schiene (21, 22), um das Senk-Seil (35A) des gleitenden Schlittens (30, 31) in der Nut des Seilrolle-Anschlags (40) zu führen.

14. Fensterheber-Modul für eine Fahrzeugtüre nach Anpruch 9, **dadurch gekennzeichnet, daß** die elastischen Mittel (50), die dem Schwenken des Anschlags in Mitnahmerichtung des sich nach unten bewegenden Schlittens entgegen wirken, aus einer Zugfeder bestehen, die mit einem Ende mit dem Modul (20) und ihrem anderen Ende mit dem Anschlag (40) verbunden ist.

15. Fensterheber-Modul fiir eine Fahrzeugtür nach Anspruch 9, **dadurch gekennzeichnet, daß** das Modul (20) Mittel zur Begrenzung der Drehung des Seilrolle-Anschlags (40) in einer Richtung entgegengesetzt zu der Mitnahmerichtung des sich nach unten bewegenden Schlittens (30, 31) umfaßt.

16. Fensterheber-Modul für eine Fahrzeugtür nach Anspruch 15, **dadurch gekennzeichnet, daß** die Mittel zur Begrenzung der Drehung des Seilrolle-Anschlags (40) aus elastischen Mitteln gebildet sind.

17. Fensterheber-Modul für eine Fahrzeugtür nach Anspruch 3 oder 5, **dadurch gekennzeichnet, daß** jeder Schlitten (30, 31) zwei vertikale Aufnahmen (230, 1230) für das Senk-Seil (35A) bzw. das Hebe-Seil (35B) des Schlittens (30, 31) aufweist, wobei die Aufnahme (1230) für das Hebe-Seil (35B) mit zweiten elastischen Mitteln (330) versehen ist, die mit dem Ende des Seils (35B) zusammenwirken, wenn der Schlitten (30, 31) zum oberen Ende der Schiene (21, 22) gezogen wird.

18. Fensterheber-Modul für eine Fahrzeugtür nach Anspruch 17, **dadurch gekennzeichnet, daß** die Aufnahmen für das Senk-Seil (35A) und das Hebe-Seil (35B) in dem Vorsprung (130) des Schlittens (30, 31) bzw. in der mit dem Vorsprung (130) versehenen Wand (30A) angeordnet sind, wobei sich die beiden Aufnahmen in einer Ebene befinden, die zu den seitlichen Wänden (30A, 30B) des Schlittens im wesentlichen senkrecht liegt.

19. Fensterheber-Modul für eine Fahrzeugtür nach Anspruch 18, **dadurch gekennzeichnet, daß** die Aufnahmen (230, 1230) des Senk-Seils (35A) bzw. des Hebe-Seils (35B) jeweils mit einem Loch (230A, 1230A) versehen sind, das durch einen in der Aufnahme (230) mündenden Kanal (230B, 1230B) verlängert ist, dessen Maß dem des Seils (35A, 35B) entspricht, wobei die Löcher (230A, 1230A) und die Kanäle (230B, 1230B) konzentrisch sind und an ihrer Verbindungsstelle nach unten bzw. nach oben einen Absatz bilden, die zweiten elastischen Mittel (330) aus einer Druckfeder gebildet sind, die in dem Aufnahmeloch (1230A) des Hebe-Seils (35B) angeordnet sind, jedes der Seile (35A, 35B) durch den Kanal (230B, 1230B) in seine Aufnahme (230, 1230) eingeführt wird, das Senk-Seil (35A) an seinem Ende mit einem Teil (135A) versehen ist, das an der Verbindungsstelle zwischen dem Loch (230A) und dem Kanal (230B) anliegt, wenn das Seil (35A) nach unten gezogen wird, und das Hebe-Seil an seinem Ende mit einem Teil (135B) versehen ist, das aus einem Körper besteht und mit einem Kopf verlängert ist, wobei die ringförmige Verbindungsstelle zwischen dem Körper und dem Kopf des Teils (135B) des Endes des Hebe-Seils (35B) die Feder (330) in dem Loch (1230B) der Hebe-Aufnahme (1230) zusammendrückt und damit den Schlitten (30, 31) auf der Schiene (21, 22) nach oben zieht.

20. Fensterheber-Modul für eine Fahrzeugtür nach einem der Ansprüche 4 bis 19, **dadurch gekennzeichnet, daß** der Schlitten (30, 31) eine seitliche Aussparung (133) aufweist, die es ermöglicht, den Abstand zwischen der oberen Seilrolle (23) des Mitnahmesystems der Seile und dem Schlitten (30, 31) sowie den Abstand zwischen der oberen Seilrolle (35) und der Schiene (21, 22) zu verringern, so daß die Auswirkung des durch die Spannung der Seile (35B) erzeugten Drehmoments begrenzt wird.

21. Fensterheber-Modul für eine Fahrzeugtür nach den Ansprüchen 4, 5, 17 und 19, **dadurch gekennzeichnet, daß** das Hebe-Seil (35B) mit dem unteren Teil des Schlittens (30, 31) verbunden ist, und daß das Senk-Seil (35A) mit dem oberen Teil des Schlittens (30, 31) verbunden ist.

22. Fensterheber-Modul für eine Fahrzeugtür nach Anspruch 1, **dadurch gekennzeichnet, daß** die Schiene oder die Schienen (21, 22) aus Metall bestehen und mit Hilfe der Achsen der Seilrollen (23, 40) an dem Modul montiert sind, wobei die Achsen der Seilrollen (23, 40) an dem Blech der Fahrzeugtür befestigt sind.

23. Fensterheber-Modul für eine Fahrzeugtür nach einem der Ansprüche 1 bis 22, **dadurch gekennzeichnet, daß** die innere Wand der Tür zwei Öffnungen aufweist, die durch eine Versteifungsstrebe miteinander verbunden sind.
